# EUROPEAN PATENT APPLICATION

(11) **EP 1 642 711 A2**
(43) Date of publication of application: **05.04.2006**
(21) Application number: 05075572.7
(22) Date of filing: 09.03.2005
(51) Int. Cl.: B32B 37/22, B42D 15/04

(54) **Multi-foldable product**

(30) Priority: 12.03.2004 GB 0405551
(71) Applicant: Gardiner, Pamela J., Oakwood, Chichester P018 8AA (GB)
(72) Inventor: Bardiner, Charles, Chichester West Sussex P018 8AA (GB)
(74) Representative: Brooks, Nigel Samuel

(57) **Abstract**

A multi-foldable product comprises a strip 1 formed of several page leaves 2 spaced by gaps 3 and adhered on both sides to lamination sheets 4,5, that is to say translucent or transparent sheets having adhesive for adhering them to the page leaves.

At one page leaf 12, a pocket leaf 14 is provided against the page leaf. Whilst the page leaf is adhered to one 4 of the lamination sheets, the pocket leaf is adhered in register with the page leaf to the other lamination sheet on its side. The pocket formed between the page leaf and the pocket leaf is open 16 at both edges 18,19 of the strip 1.

## Description

The present invention relates to a multi-foldable product and a method of making such.

In Patent No 2,359,275 (the '275 patent), there is claimed a method of producing laminated foldable strips including a plurality of spaced panels, comprising the steps of:
- transporting a sheet of printed material including first and second surfaces;
- feeding the sheet over a cutter to cut a plurality of slits, each having a predeterminable width, in the sheet in the direction of transport; then
- laminating a laminate film to each surface of the sheet to form a laminated sheet; and
- cutting the laminated sheet in a direction transverse to the slits to form a plurality of foldable sheets.

The resultant multi-foldable product is a strip of page leaves (or "spaced panels" / "foldable sheets" as they are referred to in the '275 patent) spaced from each other by the slits along the length of the strip, the page leaves being joined to each other at the slits by two thicknesses of laminate film only. The result is that the pages are foldable against each other at the slits whilst their own thickness combined with that of the laminate film on them causes them to be more rigid between the folds at the slits.

The method has now been improved to enable at least one of the page leaves to include a pocket for an insert or card.

The improved method of the present invention includes feeding an extra web, having substantially the width or less of one of the ribbons into which the sheet material is slit, in register with the ribbon and laminating it into the lamination, thereby forming in the cut product a pocket between it and the page leaf with which it is in register.

The extra web can be of the same material as the page leaves or it can be of laminate film, with its adhesive facing away from the page leaf with which it is in register. It could also be of other material.

The extra web can be fed in upstream of the cutter. However, where this is of a type relying on accurate height setting across its width, it is preferable to avoid a local height disturbance and to fed the extra web directly into the nip of laminating rollers down stream of the cutter. For this a guide over the cutter may be provided.

According to another aspect of the invention, there is provided a multi-foldable product comprising:
- a plurality of page leaves each spaced from its neighbour(s) by a fold gap;
- one laminate sheet adhered to the page leaves on one side thereof and bridging the fold gaps;
- another laminate sheet adhered to at least some of the page leaves on the other side thereof, also bridging the fold gaps and adhered to the one laminate sheet at the fold gaps; and
- at least one additional pocket-defining leaf in register with a page leaf on the other laminate sheet side of the product, this pocket leaf being adhered to the other laminate sheet and defining a pocket between itself and the page leaf that it is in register with.

More than one pocket can be provided, additional pocket leaf/leaves being provided at other page leaf(s). Further such additional pocket(s) can be provided on the other side of the product, namely on the one laminate sheet side thereof.

The pocket leaves will normally be the same width as their page leaves. However, they can be narrower, whereby a margin of the relevant page leaf is adhered to the same laminate sheet as the pocket leaf along one, the other or both of the page leaf's fold gaps from its neighbours.

To help understanding of the invention, a specific embodiment thereof will now be described by way of example and with reference to the accompanying drawings, in which:
Figure 1 is a perspective view of a multi-foldable product in accordance with the invention;
Figure 2 is a similar sc rap view on a larger scale, showing a pocket in more detail;
Figure 3 is a diagrammatic perspective view of a machine for making the product;
Figure 4 is a diagrammatic side view of the machine showing introduction of the pocket web; and
Figure 5 is a scrap plan view of the machine at the pocket web introduction point.

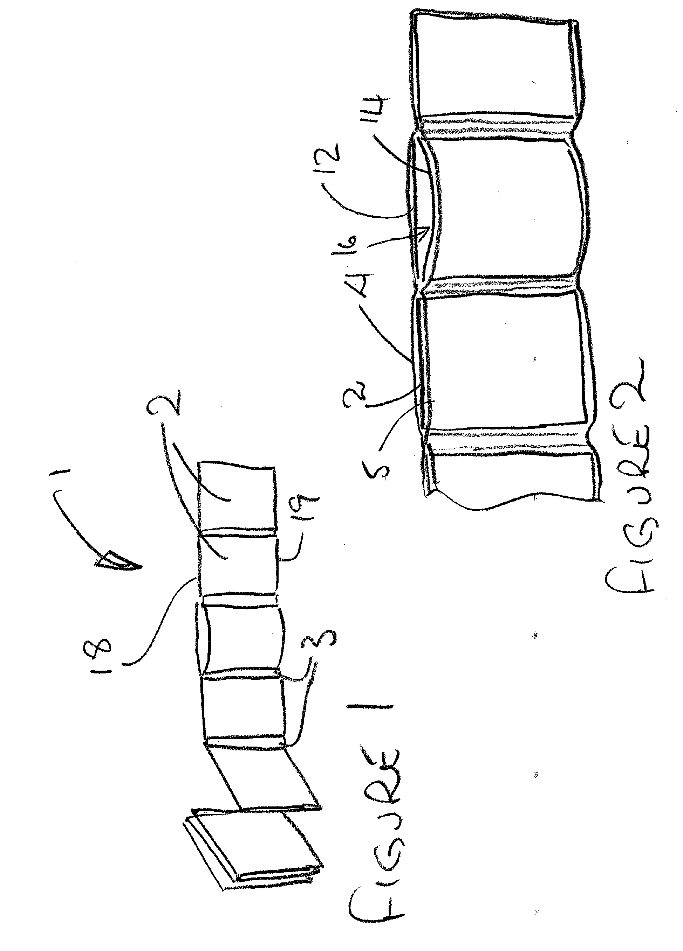

Referring to Figures 1 & 2, a multi-foldable product comprises a strip 1 formed of several page leaves 2 spaced by gaps 3 and adhered on both sides to lamination sheets 4,5, that is to say translucent or transparent sheets having adhesive for adhering them to the page leaves.

At one page leaf 12, a pocket leaf 14 is provided against the page leaf. Whilst the page leaf is adhered to one 4 of the lamination sheets, the pocket leaf is adhered in register with the page leaf to the other lamination sheet on its side. The pocket formed between the page leaf and the pocket leaf is open 16 at both edges 18,19 of the strip 1.

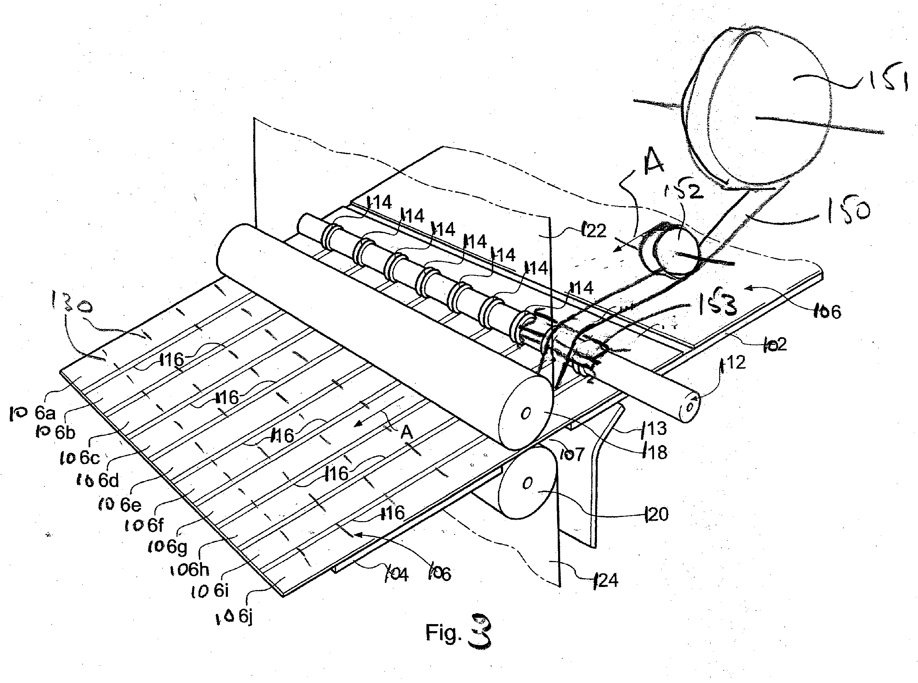

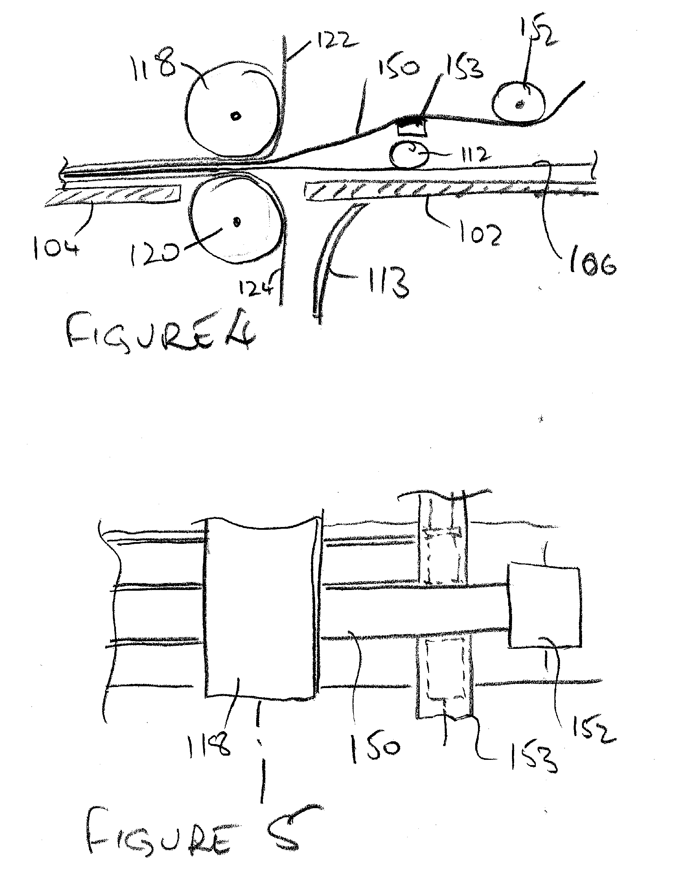

Figure 3, 4 & 5 show a machine for making the product. It is basically the same as the machine of the '275 patent, with an additional pocket-leaf web feed. As such it comprises:
an infeed table 102,
an outfeed table 104,
an inter-table gap 107,
a cutting roller 112 with cutters 114 upstream of the gap 107
a cut waste deflector 113 and
a pair of laminating rollers 118, 120 at the gap.

Sheet material 106, to be cut into page leaves is fed over the infeed table, past the cutting roller 12, where it is slit to form the fold gaps 116 between ribbons of the sheet material. At the laminating rollers, upper and lower laminations sheets 122,124 are fed to ribbons 106a - 106j of the slit sheet material, which are guillotined at lines 130 in a downstream station (not shown) into the individual pages in strip products such as shown in Figure 1.

In accordance with the invention, a web 150 of pocket material is fed from a roll 151 in register with the page material ribbon 106i, i.e. it is fed to align therewith, the web being the same width as the ribbon 106i. A pocket feed roller 152 is provided for feeding the web from a level close above the infeed table 102, whilst a guide 153 keeps it clear of the cutting roller 112, whence it enters the nip of laminating rollers 118,120 between the laminating film 122 and the ribbon 106i. At the rollers, the upper lamination sheet becomes laminated to the pocket web and the lower sheet becomes laminated to the page material. However, the pocket web and the page material are not laminated to each other. They are connected only by the lamination sheets adhering to each other at the gaps on either side of the pocket web.

When the lamination is guillotined at the lines 130, the resultant pocket in the guillotined strip product can be accessed from the edges of the strip.

## Claims

1. A method of producing laminated foldable strips including a plurality of spaced page leaves, comprising the steps of:
• transporting a sheet of printed material including first and second surfaces;
• feeding the sheet over a cutter to cut a plurality of slits, each having a predeterminable width, in the sheet in the direction of transport, the sheet being slit into ribbons; then
• laminating a laminate film to each surface of the sheet to form a laminated sheet; and
• cutting the laminated sheet in a direction transverse to the slits to form a plurality of foldable sheets, each having a plurality of spaced page leaves,
the method comprising the improvement step of:
• feeding an extra web, having substantially the width of or a lesser width than one of the ribbons, in register with the ribbon and laminating it into the lamination, thereby forming in the cut product a pocket between it and the page leaf with which it is in register.

2. A foldable strip production method as claimed in claim 1, wherein the extra web is fed in upstream of the cutter.

3. A foldable strip production method as claimed in claim 1, wherein the extra web is fed directly into the nip of laminating rollers down stream of the cutter.

4. A foldable strip production method as claimed in claim 3, including guiding the extra web past the cutter on the side of the cutter away from cut sheet.

5. A multi-foldable product comprising:
• a plurality of page leaves each spaced from its neighbour(s) by a fold gap;
• one laminate sheet adhered to the page leaves on one side thereof and bridging the fold gaps;
• another laminate sheet adhered to at least some of the page leaves on the other side thereof, also bridging the fold gaps and adhered to the one laminate sheet at the fold gaps; and
• at least one additional pocket-defining leaf in register with a page leaf on the other laminate sheet side of the product, this pocket leaf being adhered to the other laminate sheet and defining a pocket between itself and the page leaf that it is in register with.

6. A multi-foldable product as claimed in claim 5, wherein the additional pocket-defining leaf is of the same material as the page leaves.

7. A multi-foldable product as claimed in claim 5, wherein the additional pocket-defining leaf is of the same material as the laminate sheets.

8. A multi-foldable product as claimed in claim 5, claim 6 or claim 7, including a further pocket on the same side of the page leaves as the first pocket.

9. A multi-foldable product as claimed in any one of claims 5 to 8, including a further pocket on the opposite side of the page leaves as the first pocket.

10. A multi-foldable product as claimed in any one of claims 5 to 9, wherein the or each pocket leaf is of the same width as the page leaf with which it is in register.

11. A multi-foldable product as claimed in any one of claims 5 to 9, wherein the or each pocket leaf is narrower than the page leaf with which it is in register, whereby a margin of this page leaf is adhered to the same laminate sheet as the pocket leaf along one, the other or both of the page leaf's fold gaps from its neighbours.

12. A multi-foldable product substantially as hereinbefore described with reference to Figures 1 & 2 of the accompanying drawings.
